# FASCICULE DE BREVET EUROPEEN

(11) **EP 3 721 307 B1**
(45) Date de publication et mention de la délivrance du brevet: **05.04.2023**
(21) Numéro de dépôt: 18807361.3
(22) Date de dépôt: 29.11.2018
(51) Int. Cl.: G05B 23/02

(54) **MÉTHODE DE PRÉDICTION D'UNE ANOMALIE DE FONCTIONNEMENT D'UN OU PLUSIEURS ÉQUIPEMENTS D'UN ENSEMBLE**
VERFAHREN ZUR VORHERSAGE EINER ANOMALIE BEIM BETRIEB EINER ODER MEHRERER VORRICHTUNGEN IN EINER ANORDNUNG
METHOD FOR PREDICTING AN ANOMALY IN THE OPERATION OF ONE OR MORE DEVICES IN AN ASSEMBLY

(30) Priorité: 04.12.2017 FR 1761570
(43) Date de publication de la demande: 14.10.2020
(73) Titulaire: Société AIR FRANCE, 95747 Roissy-Charles-de-Gaulle Cedex (FR)
(72) Inventeur: FORTUNY, Didier, 95747 Roissy-Charles-De-Gaulles Cedex (FR)
(74) Mandataire: Kessler, Marc
(86) Numéro de dépôt international: PCT/EP2018/082935
(87) Numéro de publication internationale: WO 2019/110396

(56) Documents cités:
- AU-B2- 2015 249 207
- FR-A1- 3 016 710
- FR-A1- 3 028 331
- US-A1- 2008 262 663

## Description

### Objet de l'invention

La présente invention se rapporte à une méthode de prédiction du dysfonctionnement d'un ou plusieurs équipements d'un ensemble, les équipements fonctionnant en parallèle et sensés fonctionner de la même manière, l'équipement ou les équipements étant en particulier des machines tournantes, à savoir des machines comprenant au moins une masse tournante.

### Etat de la technique

Depuis de nombreuses années déjà, la maintenance d'équipements d'ensembles industriels est un enjeu économique majeur, qu'il s'agisse d'installations fixes comme par exemple des usines de production de produits manufacturés ou de production d'énergie, ou qu'il s'agisse d'ensembles mobiles, par exemple dans le domaine des transports, notamment les avions, les autobus, les locomotives, les navires. En effet, la maintenance des équipements représente un cout financier important, du fait d'une part de l'action de maintenance proprement dite, et d'autre part par la perte d'exploitation que représente le nécessaire arrêt complet des installations ou des ensembles dont les équipements font partie, des arrêts qui sont bien souvent imprévus et non anticipés.

Généralement, la maintenance d'équipements est dite « curative » car elle intervient uniquement après la survenue d'une panne ou d'un disfonctionnement de l'équipement. Néanmoins, une telle maintenance présente de nombreux inconvénients d'organisation en termes de mobilisation du personnel de maintenance, de disponibilité et d'approvisionnement en pièces détachées, ce qui influence négativement les activités de maintenance.

Pour un aide à une telle maintenance curative, le document US2008262663 décrit une méthode de surveillance en temps réel, d'au moins deux moteurs d'avion, pour détecter, lors du fonctionnement des moteurs, un défaut de fonctionnement et en avertir le pilote. Un calculateur surveille un paramètre de fonctionnement d'un premier moteur et un second calculateur le même paramètre d'un second moteur, les valeurs du paramètre d'un moteur étant comparées à celles de l'autre moteur et si une valeur s'écarte de l'autre d'une différence supérieure à un seuil prédéterminé l'un des moteurs est diagnostiqué comme étant en fonctionnement anormal.

La maintenance des équipements peut être « préventive », selon un calendrier fixe ou à des intervalles de fonctionnement déterminés. Elle est règlementaire et donc protectrice. Son coût est élevé car un équipement fonctionnant normalement peut être remplacé inutilement.

Il a été alors proposé une maintenance dite « prédictive », de manière à pouvoir anticiper les maintenances des équipements et de les planifier au mieux pour qu'elles aient lieu à un moment ayant le moins d'impact négatif possible sur l'exploitation des ensembles industriels. Toutefois, cette maintenance prédictive nécessite l'identification de la panne, ou du disfonctionnement, bien avant que celle-ci ou celui-ci ne touche l'équipement.

Il a été proposé de mettre sous surveillance un équipement en mettant en oeuvre le suivi, généralement en temps réel, de certains de ces paramètres de fonctionnement, dont l'évolution au court du temps est révélateur d'une dégradation de fonctionnement de l'équipement en question et donc le signe d'une panne imminente.

Par exemple, le document AU 2015 249 207 décrit, pour une locomotive ferroviaire, comportant plusieurs moteurs électriques de traction à courant alternatif triphasé, un procédé de prédiction d'une défaillance mécanique imminente, un procédé qui comprend la transformation de l'intensité du signal électrique, au cours du temps, d'un moteur, en des domaines de fréquence pour former des signature électriques, qui sont moyennées pour établir des signatures représentatives des moteurs, elles-mêmes transformées par un calcul d'erreur de moyenne quadratique en une signature de défaillance, utilisée pour déterminer le nombre de mesures défaillantes de courant électrique. Pour le moteur qui est sous évaluation, une moyenne est calculée sur les mesures de défaillances des moteurs à l'exception du moteur évalué, puis comparée à la moyenne des mesures de défaillances comprenant le moteur évalué, et sa défaillance ou non défaillance est identifiée en comparant cette différence de moyennes par rapport à un seuil.

Toutefois, de telles solutions ne sont pas satisfaisantes car elles ne sont pas assez anticipatives pour être pleinement bénéfique, l'équipement défectueux pouvant mal fonctionner longtemps avant une quelconque détection de défaut, l'installation ou l'équipement comprenant un tel équipement ne fonctionnant pas de façon optimale.

Pour améliorer l'anticipation de pannes, il a été proposé de suivre la corrélation entre différents paramètres de fonctionnement. Par exemple, pour une installation industrielle comprenant divers équipements rotatifs, tels que turbines ou des moteurs pour la mise en ouvre d'un processus industriel, le document US2005197805 décrit la détermination et le suivi d'un coefficient de corrélation de certaines paires de paramètres du processus industriel, un coefficient de corrélation qui est comparé à celui déterminé pour des conditions normales du processus, et si une différence est identifiée, une notification d'imminence de panne est générée.

Généralement, les installations ou ensembles industriels comprennent, et mettent en oeuvre, de nombreux équipements, qui peuvent être différents ou identiques entre eux, mais dont certains fonctionnent en parallèle, sensiblement de la même manière. Il a été alors proposé de baser la prédiction de la survenue d'une panne sur le suivi du fonctionnement de deux équipements redondants. Par exemple, pour une installation industrielle d'électrolyse d'aluminium, le document FR 2 981 474 décrit la surveillance d'un paramètre de fonctionnement d'un premier appareil corrélé avec un autre paramètre de fonctionnement d'un second appareil par une prédiction des valeurs du paramètre du premier appareil à partir de la valeur mesurée du deuxième paramètre du second appareil et leur comparaison avec les valeurs réellement mesurées du paramètre du premier appareil, afin de détecter une erreur de corrélation qui est le signe d'une future panne du premier appareil.

Des méthodes prédictives ont également été proposées dans le domaine aéronautique, dans lequel la survenue de pannes imprévues, et leur gestion, est plus problématique, en termes logistique, mais également en termes de couts, surtout si les pannes surviennent sur des plateformes lointaines.

Par exemple, le document US 2013197721 décrit un procédé de génération de messages particuliers liés à la performance d'un aéronef mettant en oeuvre une identification des paramètres principaux de fonctionnement de l'aéronef, ceux qui possèdent un niveau de corrélation forte, entre 0,6 et 0,8, et ensuite un calcul de corrélation entre le changement de valeur de ces paramètres principaux et un paramètre indiquant un événement de défaillance.

Le document FR 3 028 331 décrit la surveillance d'un moteur d'aéronef, pour la planification des opérations de maintenance, qui met en oeuvre une normalisation des paramètres endogènes de fonctionnement du moteur en prenant en compte un paramètre endogène du moteur et au moins un paramètre exogène propre à l'environnement d'utilisation du moteur, permettant ainsi de pouvoir comparer les données provenant de vols successifs.

Le document FR 3 016 710 décrit un procédé de prédiction d'une anomalie de fonctionnement des équipements d'un aéronef dans lequel, au cours des phases de maintenance de l'aéronef, les mesures de fonctionnement et les pannes sont récupérées sur un ordinateur pour former une base de données, et pendant la phase de maintenance, un programme d'analyse de données est exécuté afin de déterminer, en l'absence d'une panne, un ensemble de paires de paramètres qui corrèlent entre eux parmi tous les paramètres disponibles, et, toujours durant la phase de maintenance, un programme d'ordinateur est exécuté afin de calculer des corrélations de Pearson pour les paires de paramètres corrélant entre-elles et, lorsque la valeur de corrélation calculée d'une paire, pour un vol donné, tombe en dessous d'un seuil de détection prédéterminé, un dysfonctionnement est signalé. Ce procédé présente de nombreux inconvénients. Tout d'abord, afin de déterminer automatiquement quels sont les paramètres qui corrèlent entre-eux, il est nécessaire de collecter la totalité des mesures de la totalité des capteurs de la totalité des équipements de l'aéronef, créant ainsi un énorme volume de données qu'il est difficile de traiter. De plus, cette méthode n'est pas suffisamment sensible, pas assez fine dans la prédiction d'éventuelles pannes, car elle présente un fort taux de fausses alarmes ou de fausses déclarations de pannes, entraimant des remplacements inutiles d'équipements sans disfonctionnement.

### Buts de l'invention

La présente invention vise à fournir une solution, en particulier une méthode de prédiction d'une panne d'un ou plusieurs équipements d'un ensemble qui ne présente pas les inconvénients de l'état de la technique.

La présente invention vise à fournir une méthode de prédiction d'une panne d'un ou plusieurs équipements d'un ensemble, qui est plus sensible, plus fiable, et donc présentant une performance améliorée.

La présente invention vise à fournir une méthode de prédiction d'une panne d'un ou plusieurs équipements d'un ensemble qui présente un taux de fausses déclarations de pannes réduit.

### Résumé de l'invention

La présente invention porte sur une méthode de prédiction d'une anomalie de fonctionnement d'un ou plusieurs équipements d'un ensemble, comprenant les étapes de prendre un ensemble, ayant au moins un cycle de fonctionnement, et comprenant une ou plusieurs séries d'équipements comprenant au moins un premier et un second équipement fonctionnant tout les deux en parallèle et sensiblement de la même manière, chaque équipement comprenant un premier paramètre de fonctionnement ou au moins un premier, un second et un troisième paramètre de fonctionnement, chaque paramètre, évoluant, au court du temps, d'une manière similaire entre le premier et le second équipement, d'enregistrer et stocker des mesures au cours du temps du premier ou des paramètres pour le premier et le second équipements, pour un ou plusieurs cycles de fonctionnement, ou une ou plusieurs parties du ou des cycles, de collecter les mesures durant, ou après l'achèvement d'un ou plusieurs cycles de fonctionnement, ou d'une ou plusieurs parties du ou des cycles, de traiter les mesures collectées, afin de détecter un possible disfonctionnement du premier et/ou du second équipement, en établissant un premier coefficient de détermination entre les mesures du premier paramètres du premier équipement et les mesures du premier paramètres du second équipement, si, pour un ou plusieurs cycles de fonctionnement, ou une ou plusieurs parties du ou des cycles, le premier coefficient de détermination est inférieur à un premier seuil déterminé, d'émettre une notification indiquant le disfonctionnement du et/ou des premier et second équipements et/ou enclencher des étapes supplémentaires de la méthode selon l'invention, et, de préférence, si le premier coefficient de détermination est égal ou supérieur au premier seuil, émettre une notification indiquant une absence de disfonctionnement du et/ou des premier et second équipements et/ou ajuster le premier seuil en fonction du premier coefficient de détermination.

Selon des modes préférés de l'invention, la méthode selon l'invention comprend au moins une, ou une combinaison quelconque appropriée, des caractéristiques suivantes :
- la méthode comprend en outre la sélection préalable de la ou des séries de premier et second équipement de l'ensemble et/ou du premier paramètre de fonctionnement du premier ou du second équipement,
- la méthode comprend en outre les étapes de déterminer l'équation de régression linéaire, du type y = ax + b, entre le premier paramètre de fonctionnement du premier équipement et le premier paramètre de fonctionnement du second équipement pour un ou plusieurs cycles de fonctionnement, ou une ou plusieurs parties du ou des cycles, et déterminer la valeur absolue de la constante « b » de ladite équation, si la valeur absolue est inférieure ou égale à une valeur déterminée, établir pour le premier et/ou le second équipements, pour un ou plusieurs cycles de fonctionnement, ou une ou plusieurs parties du ou des cycles, un second coefficient de détermination entre le premier paramètre de fonctionnement et le second paramètre de fonctionnement, et un troisième coefficient de détermination entre le premier paramètre de fonctionnement et le troisième paramètre de fonctionnement, et si les second et troisième coefficients de détermination sont supérieurs ou égaux respectivement à un second et un troisième seuil, émettre une notification indiquant une absence de disfonctionnement et/ou ajuster les second et troisième seuils en fonction des second et troisième coefficients de détermination, si la valeur absolue est supérieure à la valeur déterminée, d'évaluer le bruit de fonctionnement du premier et/ou du second équipement, si le bruit est supérieur à une gamme déterminée de valeurs, d'émettre une notification de disfonctionnement du et/ou des équipements, si le bruit est compris dans la gamme déterminée, sans la présence de pics de valeur du premier paramètre de fonctionnement, d'émettre une notification indiquant une absence de disfonctionnement et/ou d'ajuster la gamme déterminée de valeurs pour le bruit de fonctionnement, si le bruit est compris dans une gamme de valeur déterminée, en présence de pics de valeur du premier paramètre de fonctionnement, d'émettre une notification indiquant un disfonctionnement du et/ou des équipements,
- l'étape de détermination bruit de fonctionnement du premier et/ou du second équipement est réalisée en déterminant les écart-types des mesures du premier paramètre de fonctionnement par rapport à la moyenne des mesures sur un ou plusieurs cycles de fonctionnement, ou une ou plusieurs partie du ou des cycles de fonctionnement, et en comparant les écart-types à une gamme déterminée de valeurs moyennes limites,
- le second et le troisième paramètre sont choisis parmi d'autres paramètres de fonctionnement du premier et du second équipement, différents du premier paramètre de fonctionnement, lesdits autres paramètres étant un ou plusieurs paramètres influençant directement le fonctionnement du premier et/ou du second équipement, un ou plusieurs paramètres de fonctionnement d'un ou plusieurs autres équipements de l'ensemble ou une combinaison de ceux-ci,
- le premier seuil du premier coefficient de détermination est déterminé lors d'un ou plusieurs cycles de fonctionnement de l'ensemble, ou la ou les parties du ou des cycles, dans lequel ou lesquels aucun disfonctionnement du premier et/ou du second équipement n'a été détecté,
- le second seuil du second coefficient de détermination et/ou le troisième seuil du troisième coefficient de détermination et/ou la valeur absolue de la constante de l'équation de régression linéaire, est ou sont déterminés lors d'un ou plusieurs cycles de fonctionnement de l'ensemble, ou une ou plusieurs parties du ou des cycles, dans lequel ou lesquels aucun disfonctionnement du premier et/ou du second équipement n'a été détecté,
- la gamme déterminée de valeurs moyennes limites des écart-types des mesures du premier paramètre, est déterminée lors d'un ou plusieurs cycles de fonctionnement de l'ensemble, ou une ou plusieurs parties du ou des cycles, dans lequel ou lesquels aucun disfonctionnement du premier et/ou du second équipement n'a été détecté,
- la méthode comprend en outre une ou plusieurs représentations graphiques en fonction du ou des cycles de fonctionnement, ou parties du ou des cycles, des mesures du premier paramètre de fonctionnement du premier et/ou du second équipement et/ou du premier coefficient de détermination et/ou des pics de valeur dans les mesures du premier paramètre,
- la méthode comprend en outre une ou plusieurs représentations graphiques, en fonction du ou des cycles de fonctionnement, ou parties du ou des cycles, des mesures du premier paramètre de fonctionnement du premier et/ou du second équipement, du premier coefficient de détermination et du second et/ou du troisième paramètre et/ou du premier et/ou second et/ou troisième coefficient de détermination et/ou des pics de valeur dans les mesures dudit premier paramètre,
- l'ensemble est choisi parmi un aéronef, une voiture, un autobus, un camion, une locomotive, un bateau, un navire ou un engin spatial, autonome ou pas, et le premier et le second équipement sont des machines tournantes,
- l'ensemble est un aéronef, le premier et le second équipement sont les pompes de gavage carburant d'un ou plusieurs moteurs et le premier paramètre de fonctionnement des pompes de gavage carburant est le courant électrique consommé par chaque pompe de gavage carburant, le second paramètre est la quantité moyenne de carburant mesurée sur le réservoir nourrice, et le troisième paramètre est la quantité moyenne de carburant mesurée dans le réservoir principale.

La présente invention porte également sur une méthode de maintenance d'un ensemble, comprenant une ou plusieurs séries d'équipements comprenant au moins un premier et un second équipement fonctionnant tout les deux en parallèle et sensiblement de la même manière, mettant en oeuvre la méthode selon l'invention.

### Brève description des figures

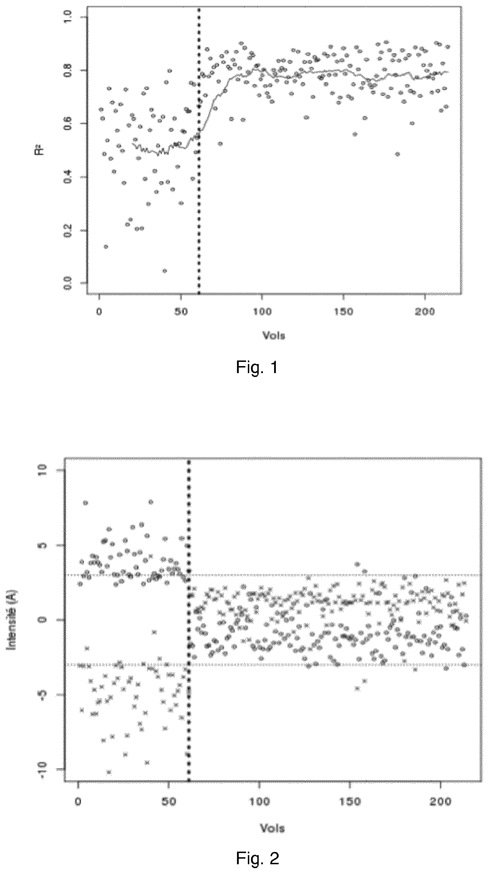

La figure 1 est un graphique représentant l'évolution du coefficient de détermination établi pour un premier paramètre de fonctionnement de deux équipements redondants en fonction du nombre de cycle de fonctionnement, avant et après remplacement de l'équipement défectueux, pour un mode de réalisation particulier de l'invention dans lequel l'ensemble est un aéronef, les cycles de fonctionnement sont des vols de l'aéronef, et dans lequel le premier paramètre est l'intensité du courant électrique consommé par deux pompes de gavage carburant.
La figure 2 est un graphique représentant l'évolution, en fonction du nombre de cycles de fonctionnement, de la valeur de la constante de l'équation de régression, établie pour une multitude de cycles de fonctionnement, entre le premier paramètre de fonctionnement du premier équipement et le premier paramètre de fonctionnement du second équipement, avant et après remplacement de l'équipement défectueux, pour le mode de réalisation particulier de l'invention dans lequel l'ensemble, comprenant les équipement redondants, est un aéronef, les cycles de fonctionnement sont des vols, et dans lequel le premier paramètre est l'intensité du courant électrique consommé par deux pompes de gavage carburant.

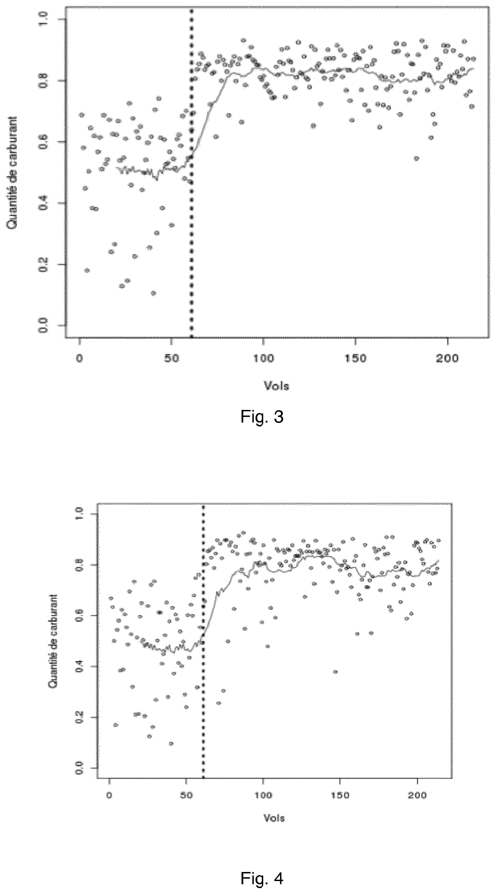

La figure 3 est un graphique représentant l'évolution, en fonction du nombre de cycles de fonctionnement, du second coefficient de détermination établi entre le premier paramètre de fonctionnement d'un des deux équipements redondants et un second paramètre influençant le fonctionnement de l'équipement, avant et après remplacement de l'équipement, pour le mode de réalisation particulier de plusieurs vols d'un aéronef, le premier paramètre étant le courant électrique consommé par une pompe de gavage carburant, le second étant la quantité moyenne de carburant mesurée sur le réservoir nourrice.
La figure 4 est un graphique représentant l'évolution, en fonction du nombre de cycles de fonctionnement, du troisième coefficient de détermination établi entre le premier paramètre de fonctionnement d'un des deux équipements redondants et un troisième paramètre influençant le fonctionnement de l'équipement, avant et après remplacement de l'équipement, pour le mode de réalisation particulier de plusieurs vols d'un aéronef, le premier paramètre étant le courant électrique consommé par une pompe de gavage carburant, le troisième étant la quantité moyenne de carburant mesurée dans le réservoir principale.

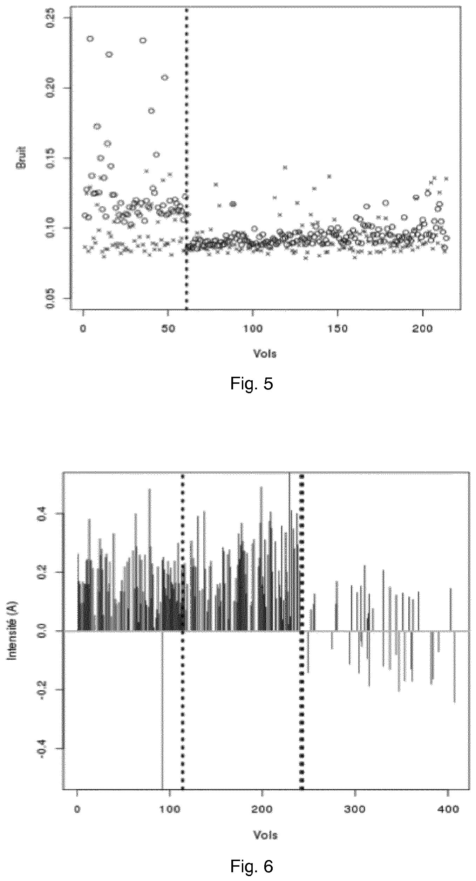

La figure 5 est un graphique représentant l'évolution, en fonction du nombre de cycles de fonctionnement, du bruit de fonctionnement d'un des deux équipements, avant et après remplacement de l'équipement, pour le mode de réalisation particulier de plusieurs vols d'un aéronef, le premier paramètre étant le courant électrique consommé par une pompe de gavage carburant.
La figure 6 est un graphique représentant, en fonction du nombre de cycles de fonctionnement, de l'amplitude des fronts montants du premier paramètre de fonctionnement d'un des deux équipements, avant et après remplacement de l'équipement, pour le mode de réalisation particulier de plusieurs vols d'un aéronef, le premier paramètre étant le courant électrique consommé par une pompe de gavage carburant.

### Description détaillée de l'invention

La méthode selon l'invention est une méthode de prédiction d'une anomalie de fonctionnement, ou d'une panne, d'un ou plusieurs équipements d'un ensemble, qui nécessitent une maintenance, ou qui offre des performances améliorées, ou une plus grande longévité, dès la réalisation de cette maintenance, l'ensemble comprenant une ou plusieurs série d'équipement, chaque série comprenant au moins deux équipements, dits redondants car fonctionnant en parallèle, sensiblement de la même manière, et ayant chacun au moins un premier paramètre de fonctionnement qui évolue, au court du temps, d'une manière similaire entre les deux équipements lors de leur fonctionnement.

De préférence, le premier paramètre de fonctionnement qui est suivi dans le temps, est au moins du même type pour les deux équipements, avantageusement il s'agit du même paramètre de fonctionnement, comme par exemple la valeur de la consommation électrique de chaque équipement.

Les équipements en question peuvent être tout système de traitement de données ou des machines, quelque soit leur nature, mécanique et/ou électrique et/ou chimique et/ou électronique et leur degré de complexité, de préférence des machines tournantes, des équipements fonctionnant en continu et/ou par intermittence et pouvant être mis en oeuvre dans de nombreux domaines techniques, par exemple pour la fabrication ou la transformation de produits, la production d'énergie ou le transport.

De préférence, l'ensemble peut faire partie d'un système industriel plus complexe.

De préférence, l'ensemble dont il est question dans la présente invention est utilisé dans la production d'électricité, de pétrole ou de gaz.

Dans un mode de réalisation particulier de l'invention, l'ensemble est mis en oeuvre pour la production d'électricité et les au moins deux équipements sont des turbines à gaz.

Sans être limitatif, l'invention va être décrite pour un autre mode de réalisation, dans le domaine des transports, dans lequel l'ensemble est un aéronef, par exemple un avion ou un drone, et les équipements sont des pompes de gavage carburant des moteurs, le premier paramètre de fonctionnement étant le courant électrique consommé par chaque pompe de gavage ; néanmoins, les équipements en question peuvent être d'autres dispositifs embarqués de l'aéronef, de préférence d'autres machines tournantes, autres que des pompes à carburants. Toutefois, la méthode peut être mise en oeuvre plus généralement dans le domaine des transports, comme par exemple les voitures, autobus, ou camions, les locomotives, les navires ou les engins spatiaux, mais également dans le domaine de la robotique, par exemple des robots autonomes.

La méthode comprend une première étape d'enregistrement et de stockage des mesures, au cours du temps, et donc de l'évolution, d'un ou plusieurs paramètres de fonctionnement des équipements redondants dont une panne doit être prédite, le ou les paramètres étant censés évoluer au court du temps sensiblement de la même manière pour chaque équipement. De préférence, en plus du ou des paramètres des équipements redondants, un enregistrement et un stockage des mesures, au cours du temps, est réalisé pour un ou plusieurs autres paramètres, éventuellement des paramètres de fonctionnement d'autres équipements ou dispositifs de l'ensemble, de préférence également redondants entre eux, et qui sont, de préférence, directement liés au fonctionnement des deux équipements redondants suivis. Par exemple, pour des pompes de gavage carburant des moteurs d'un aéronef, la quantité de kérosène dans un réservoir nourrice et la quantité de kérosène dans le réservoir global peuvent également être mesurées, enregistrées et stockés pour un traitement ultérieur.

L'enregistrement et le stockage des mesures, quelque soit le paramètre de fonctionnement concerné, peuvent être réalisés par les équipements eux-mêmes ou par un dispositif de l'ensemble en question, ou bien encore par un dispositif, ou par un système, externe à l'ensemble en question.

De préférence, la méthode comprend une étape de collecte des données correspondantes aux mesures du ou des paramètres. Cette collecte peut se faire sur, et à l'aide, d'un dispositif ou système distinct et distant de l'ensemble considéré, et peut être réalisée, soit après l'achèvement de plusieurs cycles de fonctionnement de l'ensemble considéré, soit à la fin d'un seul cycle de fonctionnement, soit de façon continu au cours du temps, de préférence après une période de temps qui correspond à une ou plusieurs parties d'un cycle de fonctionnement de l'ensemble considéré.

On entend par « cycle de fonctionnement », la période de temps pendant laquelle l'ensemble considéré, et donc les équipements de l'ensemble, est ou sont en fonctionnement, donc en état de marche. Il s'agit donc de la période de temps séparant le démarrage de l'arrêt de l'ensemble considéré ou de ces équipements considérés. Les parties d'un cycle de fonctionnement sont des périodes de temps comprises dans la période de fonctionnement des équipements. Ces parties de cycle peuvent être des périodes durant lesquels les équipements fonctionnent de la même manière entre eux, ou de la même manière entre eux et de façon différente par rapport à une autre partie de leur cycle de fonctionnement.

Par exemple, pour un aéronef, et si l'on considère qu'un cycle de fonctionnement est un vol d'un aéroport de départ à un aéroport de destination, l'enregistrement continu et le stockage du ou des paramètres des deux équipements se fait dès le démarrage des équipements jusqu'à leur arrêt, et/ou pour des parties de cycles, à savoir les différentes phases du vol, le roulage, le décollage, la montée, la phase de croisière, la descente, la phase d'atterrissage, et roulage vers le parking. Cet enregistrement et ce stockage se fait à l'aide d'un enregistreur de données de vol ou un système de surveillance de l'état de l'aéronef, encore appelé ACMS (acronyme anglais pour « Aircraft Condition Monitoring System »), qui génère des rapports appelés snapshots ou des fichiers plus lourds appelés SAR, acronyme anglais pour « Smart ACMS Recorder », représentant les valeurs du ou des paramètres au cours du temps. Les rapports peuvent être communiqués au cours du vol via le système de communication air/sol, ou ACARS (acronyme anglais pour « Aircraft Communication Addressing And Reporting System »), durant des intervalles de temps déterminés, les SARs pouvant être communiqués après le vol, ou après une série de plusieurs vols successifs, à un dispositif ou système tiers qui les collecte en vue de les traiter.

Il est particulièrement avantageux que la méthode selon l'invention comprenne une étape préalable de sélection des équipements redondants à surveiller, et éventuellement également du ou des paramètres de fonctionnement à suivre. De préférence, la méthode met en oeuvre le suivi d'au moins un paramètre de fonctionnement d'au moins deux équipements redondants déterminés, donc identiques et qui fonctionnent en parallèle, et éventuellement également un ou plusieurs autres paramètres de fonctionnement d'un ou plusieurs dispositifs ou équipements de l'ensemble dont le fonctionnement est directement lié au fonctionnement des deux équipements redondants. Cela présente l'avantage de ne collecter que les données correspondantes au(x) paramètre(s) déterminé(s) pour des équipements déterminés, sans devoir collecter, puis sélectionner et traiter la totalité des données, de la totalité des paramètres de fonctionnement de la totalité des équipements de l'ensemble en question, surtout s'il s'agit d'un aéronef.

La méthode selon l'invention comprend en outre une étape de traitement des données collectées.

Pour un premier cycle de fonctionnement de l'ensemble en question, ou des intervalles de temps dans un premier cycle de fonctionnement, par exemple pour un aéronef, un vol ou les différentes phases du vol, une régression linéaire est établie entre les valeurs, au court du temps, du premier paramètre de fonctionnement du premier équipement et celles du même paramètre de fonctionnement du second équipement. En effet, les deux équipements fonctionnant en parallèle, et étant censés le faire de façon sensiblement identique au court du temps, une relation linéaire existe donc entre les valeurs de ce premier paramètre qui ont été mesurés pour les deux équipements redondants.

Un premier coefficient de détermination est alors calculé pour le premier cycle, ou partie du premier cycle, de fonctionnement.

Contrairement à un coefficient de corrélation, qui permet de déterminer l'intensité de la liaison qui peut exister entre deux valeurs, le coefficient de détermination, qui, pour une régression linéaire, est le carré du coefficient de corrélation, présente l'avantage de dire à quel point l'équation de régression déterminée est adaptée pour décrire la distribution des valeurs des mesures. De plus, pour ce qui concerne un coefficient de corrélation, ce dernier ne peut être utilisé que pour des séries de valeurs permutables, à savoir des valeurs d'une première série de mesures d'un premier équipement pouvant être échangées avec celles d'une seconde série de valeurs d'un second équipement, alors que le coefficient de détermination permet d'identifier la relation existante entres des valeurs, que ces dernières soient permutables ou non entre deux série de mesures, les mesures d'un équipement étant liées à celles de l'autre équipement, sans pour autant pouvoir être permutées.

Ainsi, un coefficient de détermination de « 1 » signifie alors que l'équation de la droite de régression est capable de déterminer 100% de la distribution des valeurs, signifiant un pouvoir de prédiction fort, alors qu'un coefficient de détermination de « 0 » signifie que la droite de régression n'explique absolument pas la distribution des valeurs et que les valeurs sont très dispersées, ce qui est le signe d'un pouvoir de prédiction faible.

Ensuite, une multitude de régressions linéaires sont établies et une multitude de coefficient de détermination sont calculés, entre les valeurs, au court du temps, du premier paramètre de fonctionnement du premier équipement et celles du même paramètre de fonctionnement du second équipement, pour d'autres cycles de fonctionnement, ou des intervalles de temps d'autres cycles de fonctionnement, qui peuvent être antérieurs et/ou ultérieurs au premier cycle de fonctionnement, afin d'établir une collection de valeurs pour le premier coefficient de détermination sur une multitude de cycles ou parties d'une multitude de cycles.

De préférence, le nombre de cycle de fonctionnement pris en considération est compris entre deux et deux cents ou plus, avantageusement il est d'environ quarante cycles, un nombre qui représente un bon compromis entre quantité de mesures à traiter et fiabilité de la méthode selon l'invention.

Dans la présente invention, pour un cycle de fonctionnement donné, ou pour une série de cycles de fonctionnement, si une valeur, de préférence plusieurs des valeurs du premier coefficient de détermination est/sont égales ou se situe(nt) au dessus d'un premier seuil déterminé, entre ce premier seuil et la valeur de « 1 », cela signifie que les valeurs mesurées pour le premier paramètres du premier équipement sont proches de celles mesurées pour le second équipement et que donc les deux équipements fonctionnent en parallèle d'une façon symétrique ou sensiblement symétrique. Par contre, si une valeur, de préférence plusieurs valeurs du premier coefficient de détermination se situent en dessous d'un premier seuil déterminé alors les deux équipements redondants ne fonctionnent pas d'une façon symétrique. Par conséquent, une première notification peut être émise pour indiquer le disfonctionnement ou le bon fonctionnement du et/ou des équipements et déclencher, ou pas, une demande d'inspection, une maintenance ou le remplacement des équipements redondants, soit, et de préférence, pour enclencher des étapes supplémentaire afin d'affiner la méthode selon l'invention.

Ce premier seuil déterminé est fonction des équipements redondants qui sont suivis. Il est de préférence établi sur la base d'un ou plusieurs cycles de fonctionnement dans lequel, ou lesquels, aucun des deux équipements redondants n'a subis un disfonctionnement ou une panne. De préférence, ce premier seuil déterminé est mis à jour en continu, en fonction des premiers coefficients de détermination établis pour des cycles de fonctionnement sans panne.

Dans l'exemple des mesures du courant électrique consommé par des pompes de gavage carburant des moteurs d'un aéronef, un premier coefficient de détermination égal ou compris entre 0,6 et 1, de préférence entre 0,65 et 0,7, signifie que les pompes de gavage carburant fonctionnent de façon symétrique ou sensiblement symétrique, alors qu'un premier seuil inférieur à 0,6 signifie que les pompes fonctionnent de façon asymétrique (figure 1).

Afin de réduire, voir éliminer les fausses alarmes ou de fausses déclarations de pannes, la méthode selon l'invention comprend une ou plusieurs étapes supplémentaires, dont la mise en oeuvre est de préférence réalisée par le disfonctionnement d'un ou des deux équipements, de préférence à la suite de l'émission de la notification signalant ce disfonctionnement.

De préférence, la méthode met en oeuvre une étape d'évaluation de la constante « b » de l'équation de la droite de régression linéaire, du type Y= aX + b, qui est déterminée pour le premier paramètre de fonctionnement du premier équipement et celui du second équipement, pour un cycle de fonctionnement, ou partie de ce cycle, de préférence également pour d'autre cycles, ou parties de cycles, de fonctionnement.

La valeur absolue de la constante « b » de cette ou ces équations de régression permet d'estimer l'écart entre le premier paramètre de fonctionnement des deux équipements redondants et donc d'estimer avec quel écart les deux équipements redondants fonctionnent. Si la valeur « b » est supérieure ou égale à une valeur déterminée, un seuil qui est fonction des équipements redondants suivis, cela signifie que l'un des deux équipements considérés n'a plus un fonctionnement linéaire, dans un cycle, ou partie de cycle, de fonctionnement ou entre différents cycles de fonctionnement (figure 2). Dans ce cas, un second et un troisième coefficient de détermination sont calculés et/ou évalués pour l'un des équipements, de préférence les deux équipements redondants, afin d'identifier lequel des deux équipements ne fonctionne pas normalement.

De préférence, cette valeur déterminée de « b » est également établie sur la base d'un ou plusieurs cycles de fonctionnement dans lequel, ou lesquels, aucun des deux équipements redondants n'a subis un disfonctionnement ou une panne. De préférence, cette valeur déterminée est mise à jour en continu, en fonction des valeurs de constante « b » établies pour des cycles de fonctionnement sans panne, et permet d'ajuster cette valeur déterminée servant de seuil.

Un second coefficient de détermination est calculé pour un cycle de fonctionnement, ou des intervalles de temps dudit cycles, de préférence une multitude de cycles de fonctionnement, ou des intervalles de temps desdits cycles, qui est ou sont le ou les cycles ou parties de cycles, durant lequel ou lesquels le premier coefficient de détermination a été effectué. Ce coefficient de détermination est calculé entre le premier paramètre d'un des deux dispositifs redondants et un second paramètre qui est soit un autre paramètre de fonctionnement du dispositif en question, différent du premier paramètre de fonctionnement, ou un paramètre qui influence directement le fonctionnement de l'équipement évalué ou un paramètre de fonctionnement d'un ou plusieurs autres équipements ou dispositifs de l'ensemble, qui sont, de préférence, directement liés au fonctionnement de l'équipement redondant évalué.

Un troisième coefficient de détermination est calculé pour un cycle de fonctionnement, ou des intervalles de temps dudit cycles, de préférence une multitude de cycles de fonctionnement, ou des intervalles de temps desdits cycles, entre le premier paramètre d'un des deux dispositifs redondants et un troisième paramètre qui peut être un ou plusieurs autres paramètres de fonctionnement du dispositif en question, un paramètre, de préférence plusieurs paramètres, différents) du premier et du second paramètre de fonctionnement, ou un paramètre qui influence directement le fonctionnement de l'équipement évalué, ou un paramètre de fonctionnement d'un ou plusieurs autres équipements ou dispositifs de l'ensemble qui sont directement liés au fonctionnement de l'équipement redondant évalué.

De préférence, les second et troisième paramètres sont différents l'un de l'autre.

Si le second coefficient de détermination est supérieur ou égale à un second seuil, qui est fonction du premier paramètre de fonctionnement de l'équipement et du second paramètre considéré, et que le troisième coefficient de détermination est supérieur ou égale à un troisième seuil, qui est fonction du premier paramètre de fonctionnement de l'équipement et du troisième paramètre considéré, cela signifie que l'équipement évalué fonctionne normalement. Dans le cas contraire, l'équipement évalué souffre d'un disfonctionnement et une notification est émise pour le signaler et pour qu'une inspection, une maintenance ou un remplacement soit effectué.

Le second et le troisième seuil sont déterminés sur la base d'un ou plusieurs cycles de fonctionnement dans lequel, ou lesquels, aucun des deux équipements redondants n'a subis un disfonctionnement ou une panne. De préférence, ces second et troisième seuils sont mis à jour en continu.

Dans l'exemple de pompes de gavage carburant d'un aéronef, pour une valeur de constante « b » inférieure ou égale à « 3 » (figure 2), un second coefficient de détermination est déterminé, pour un ou plusieurs vols, entre les mesures de consommation de courant électrique d'une des pompes de gavage carburant avec la quantité de kérosène dans un réservoir nourrice et un troisième coefficient de détermination déterminé entre les mesures de consommation de courant électrique de la pompes de gavage carburant considéré avec la quantité de kérosène dans le réservoir principal. Si le second coefficient de détermination est supérieur ou égale à 0,7 et que le troisième coefficient de détermination est supérieur ou égal à 0,6, alors la pompe de gavage carburant pour laquelle ces déterminations ont été faites ne souffre pas d'un dysfonctionnement. Dans le cas contraire, la pompe en question est défaillante et une notification de disfonctionnement est émise (figures 3 et 4).

Si la valeur absolue de la constante « b », de la droite de régression établie pour le premier paramètre de fonctionnement du premier équipement et celui du second équipement, pour un cycle de fonctionnement, ou partie de ce cycle, ou d'autre cycles, ou parties de cycles, de fonctionnement, est supérieure à la valeur déterminée, cela ne signifie pas pour autant que l'un des deux équipements redondants est défectueux. En effet, les deux équipements redondants peuvent avoir un fonctionnement asymétrique, ou de manière décalée, sans être l'objet d'un disfonctionnement. Pour évaluer cela, la méthode comprend une étape d'évaluation du « bruit » du ou des équipements redondants. Pour cela, les variations de mesures du premier paramètre sont déterminées et comparées à une valeur moyenne déterminée, ou gamme déterminée de valeurs moyennes limites, pour un ou des cycles de fonctionnement en l'absence d'un disfonctionnement, le bruit est alors représenté par les écart-types du premier paramètre par rapport à la valeur moyenne des mesures. Si un ou plusieurs écart-types sont supérieurs à la valeur, ou gamme, déterminée au préalable pour un ou des cycles sans disfonctionnement des équipements redondants, alors l'équipement est considéré comme très bruité et souffrant d'un disfonctionnement ; une notification indiquant un disfonctionnement dudit et/ou desdits équipements est alors émise pour qu'une maintenance ou un remplacement soit effectué. Si les écart-types sont inférieurs à cette valeur, ou gamme de valeur, prédéterminée, alors une détection de fronts montants, de leur nombre et leur intensité, est effectuée dans les valeurs mesurées pour le premier paramètre, afin d'identifier des pics de valeur, des sursauts, dans les mesures du premier paramètre de fonctionnement. S'il existe des fronts montants, l'équipement évalué est alors considéré, et indiqué par une notification, comme subissant un disfonctionnement, pour qu'une maintenance ou un remplacement soit effectué, alors que s'il n'existe pas de fronts montants, l'équipement est considéré et indiqué par une alerte_comme ayant un fonction normal.

Dans l'exemple de pompe de gavage carburant d'un aéronef, si la valeur de la constante « b » de la droite de régression du premier paramètre de fonctionnement des deux équipements redondants pour un cycle, ou parties de cycles, ou des cycles ou parties des cycles de fonctionnement, est supérieure à « 3 », le bruit de fonctionnement de l'équipement évalué est déterminé (figure 5). Si l'écart-type d'une ou plusieurs valeurs du premier paramètre de fonctionnement sont supérieures à 0,1, alors la pompe est signalée comme défectueuse. Si ce dernier est compris entre 0,08 et 0,1, sans présence de pics de valeur, alors la pompe fonctionne normalement, et sera mentionnée comme telle, alors qu'en présence de pics de valeur, par exemple des pics d'intensité du courant électrique supérieure à 150 mA avec une densité d'apparition en moyenne sur 20 vols supérieure à 1,6, alors la pompe est signalée comme défectueuse (figure 6).

De préférence, les étapes de la méthode selon l'invention se font de manière séquentielle, c'est-à-dire que les résultats de l'évaluation du premier coefficient de détermination, en particulier l'émission de la première notification mentionnant le disfonctionnement ou l'absence de disfonctionnement, déclenchent, ou pas, la mise en oeuvre des étapes supplémentaires. Toutefois, il peut être avantageux de réaliser chaque étapes de la méthode selon l'invention pour chaque cycle d'un nombre déterminé de cycles de fonctionnement, et si, pour cette multitude de cycles de fonctionnement, par exemple quarante ou cinquante, l'équipement évalué est considéré comme défectueux dans plus de la moitié des cas, alors il est considéré comme devant être remplacé, et sera remplacé.

De préférence, l'évolution du ou des paramètres de fonctionnement des équipement redondants au court du temps, en particulier d'un ou plusieurs cycles ou parties de cycle de fonctionnement et/ou les coefficients de détermination, éventuellement également les différents seuils et valeur déterminé ou valeur moyenne, peuvent être représentées sous forme graphique.

La ou les notifications peuvent être de tout type, visuelles et/ou sonores. De préférence elles sont à destination du tiers devant décider et/ou réaliser la maintenance de l'ensemble comprenant les équipements redondants ; toutefois, il est également envisageable que l'opérateur ou les opérateurs de l'ensemble en question puissent également avoir accès ou être le destinataire de ces notifications.

La méthode selon l'invention est de mise en oeuvre par un ou plusieurs dispositifs ou un systèmes de prédiction d'une anomalie de fonctionnement d'un ou plusieurs équipements d'un ensemble fixe ou mobile, ledit ou lesdits dispositifs ou systèmes faisant partie intégrante, ou non, de l'ensemble fixe ou mobile, et comprenant des moyens matériels et/ou logiciels permettant la mise en oeuvre de tout ou partie des étapes de la méthode de l'invention. De préférence, il s'agit d'un dispositif ou système distant de l'ensemble considéré ; il comprend alors des moyens de communication avec l'ensemble des deux dispositifs redondants, et éventuellement également avec l'entité devant réaliser la maintenance des équipements de l'ensemble. De préférence, il comprend également des moyens de collection des mesures du ou des paramètres suivis et enregistrés et des moyens d'affichages des différents coefficients de détermination, pour tout ou partie d'un ou plusieurs cycles de fonctionnement de l'ensemble.

## Revendications

1. Une méthode de prédiction d'une anomalie de fonctionnement d'un ou plusieurs équipements d'un ensemble, ladite méthode comprenant les étapes suivantes :
- prendre un ensemble, ayant au moins un cycle de fonctionnement, et comprenant une ou plusieurs séries d'équipements comprenant au moins un premier et un second équipement fonctionnant tout les deux en parallèle, et sensiblement de la même manière, chaque équipement comprenant un premier paramètre de fonctionnement ou au moins un premier, un second et un troisième paramètre de fonctionnement, chaque paramètre, évoluant, au court du temps, d'une manière similaire entre ledit premier et ledit second équipement,
- enregistrer et stocker des mesures au cours du temps dudit premier ou desdits paramètres pour ledit premier et ledit second équipements, pour un ou plusieurs cycles de fonctionnement, ou une ou plusieurs parties dudit ou desdits cycles,
- collecter lesdites mesures durant, ou après l'achèvement, d'un ou plusieurs cycles de fonctionnement, ou d'une ou plusieurs parties dudit ou desdits cycles,
- traiter lesdites mesures collectées, afin de détecter un possible disfonctionnement dudit premier et/ou dudit second équipement, en établissant un premier coefficient de détermination entre les mesures du premier paramètres dudit premier équipement et les mesures du premier paramètres dudit second équipement,
- si, pour un ou plusieurs cycles de fonctionnement, ou une ou plusieurs parties dudit ou desdits cycles, ledit premier coefficient de détermination est inférieur à un premier seuil déterminé, émettre une notification indiquant le disfonctionnement du et/ou desdits premier et second équipements et/ou enclencher des étapes supplémentaires de ladite méthode, et, de préférence, si ledit premier coefficient de détermination est égal ou supérieur audit premier seuil, émettre une notification indiquant une absence de disfonctionnement du et/ou desdits premier et second équipements et/ou ajuster ledit premier seuil en fonction dudit premier coefficient de détermination.

2. La méthode selon la revendication 1, comprenant en outre la sélection préalable de la ou des séries de premier et second équipement de l'ensemble et/ou du premier paramètre de fonctionnement dudit premier ou dudit second équipement.

3. La méthode selon l'une quelconque des revendications 1 ou 2, comprenant en outre les étapes suivantes :
- déterminer une équation de régression linéaire, du type y = ax + b, entre le premier paramètre de fonctionnement du premier équipement et le premier paramètre de fonctionnement du second équipement pour un ou plusieurs cycles de fonctionnement, ou une ou plusieurs parties dudit ou desdits cycles, et déterminer la valeur absolue de la constante « b » de ladite équation,
- si ladite valeur absolue est inférieure ou égale à une valeur déterminée, établir pour le premier et/ou le second équipements, pour ledit ou lesdits cycles de fonctionnement, ou partie(s) dudit ou desdits cycles, un second coefficient de détermination entre ledit premier paramètre de fonctionnement et le second paramètre de fonctionnement, et un troisième coefficient de détermination entre ledit premier paramètre de fonctionnement et le troisième paramètre de fonctionnement, et si lesdits second et troisième coefficients de détermination sont supérieurs ou égaux respectivement à un second et un troisième seuil, émettre une notification indiquant une absence de disfonctionnement et/ou ajuster lesdits second et troisième seuils en fonction desdits second et troisième coefficients de détermination,
- si ladite valeur absolue est supérieure à ladite valeur déterminée, évaluer un bruit de fonctionnement du premier et/ou du second équipement,
- si ledit bruit est supérieur à une gamme déterminée de valeurs, émettre une notification_de disfonctionnement dudit et/ou desdits équipements,
- si ledit bruit est compris dans ladite gamme déterminée, sans la présence de pics de valeur du premier paramètre de fonctionnement, émettre une notification indiquant une absence de disfonctionnement et/ou ajuster ladite gamme déterminée de valeurs pour ledit bruit de fonctionnement,
- si ledit bruit est compris dans une gamme de valeur déterminée, en présence de pics de valeur du premier paramètre de fonctionnement, émettre une notification indiquant un disfonctionnement dudit et/ou desdits équipements.

4. La méthode selon la revendication précédente, dans laquelle l'étape de détermination bruit de fonctionnement du premier et/ou du second équipement est réalisée en déterminant des écart-types des mesures du premier paramètre de fonctionnement par rapport à la moyenne desdites mesures sur un ou plusieurs cycles de fonctionnement, ou une ou plusieurs partie dudit ou desdits cycles de fonctionnement, et en comparant lesdits écart-types à une gamme déterminée de valeurs moyennes limites.

5. La méthode selon l'une quelconque des revendications 3 ou 4, dans laquelle le second et le troisième paramètre sont choisis parmi des paramètres de fonctionnement du premier et du second équipement, différents du premier paramètre de fonctionnement, lesdits autres paramètres étant un ou plusieurs paramètres influençant directement le fonctionnement dudit premier et/ou dudit second équipement, un ou plusieurs paramètres de fonctionnement d'un ou plusieurs autres équipements de l'ensemble ou une combinaison de ceux-ci.

6. Méthode selon l'une quelconque des revendications 1 ou 2, dans laquelle le premier seuil du premier coefficient de détermination, est déterminé lors d'un ou plusieurs cycles de fonctionnement de l'ensemble, ou la ou les parties dudit ou desdits cycles, dans lequel ou lesquels aucun disfonctionnement du premier et/ou du second équipement n'a été détecté.

7. Méthode selon l'une quelconque des revendications 3 à 6, dans laquelle le second seuil du second coefficient de détermination et/ou le troisième seuil du troisième coefficient de détermination et/ou la valeur absolue de la constante de l'équation de régression linéaire, est ou sont déterminés lors d'un ou plusieurs cycles de fonctionnement de l'ensemble, ou une ou plusieurs parties dudit ou desdits cycles, dans lequel ou lesquels aucun disfonctionnement du premier et/ou du second équipement n'a été détecté.

8. Méthode selon la revendication 4, dans laquelle la gamme déterminée de valeurs moyennes limites des écart-types des mesures du premier paramètre, est déterminée lors d'un ou plusieurs cycles de fonctionnement de l'ensemble, ou une ou plusieurs parties dudit ou desdits cycles, dans lequel ou lesquels aucun disfonctionnement du premier et/ou du second équipement n'a été détecté.

9. Méthode selon l'une quelconque des revendications 1 ou 3, comprenant en outre une ou plusieurs représentations graphiques, en fonction du ou des cycles de fonctionnement, ou parties dudit ou desdits cycles, des mesures du premier paramètre de fonctionnement du premier et/ou du second équipement et/ou du premier coefficient de détermination, ou dudit premier paramètre de fonctionnement, dudit premier coefficient de détermination et du second et/ou du troisième paramètre et/ou du premier et/ou second et/ou troisième coefficient de détermination et/ou des pics de valeur dans les mesures dudit premier paramètre.

10. Méthode selon la revendication 1, comprenant en outre une ou plusieurs représentations graphiques, en fonction du ou des cycles de fonctionnement, ou parties dudit ou desdits cycles, des mesures du premier paramètre de fonctionnement du premier et/ou du second équipement et/ou du premier coefficient de détermination et/ou des pics de valeur dans les mesures dudit premier paramètre.

11. Méthode selon la revendication 3, comprenant en outre une ou plusieurs représentations graphiques, en fonction du ou des cycles de fonctionnement, ou parties dudit ou desdits cycles, des mesures du premier paramètre de fonctionnement du premier et/ou du second équipement, du premier coefficient de détermination et du second et/ou du troisième paramètre et/ou du premier et/ou second et/ou troisième coefficient de détermination et/ou des pics de valeur dans les mesures dudit premier paramètre.

12. Méthode selon l'une quelconque des revendications précédentes, dans laquelle l'ensemble est choisi parmi un aéronef, une voiture, un autobus, un camion, une locomotive, un bateau, un navire ou un engin spatial, autonome ou pas, et le premier et le second équipement sont des machines tournantes.

13. Méthode selon la revendication précédente, dans laquelle l'ensemble est un aéronef, le premier et le second équipement sont les pompes de gavage carburant d'un ou plusieurs moteurs, le premier paramètre de fonctionnement desdites pompes de gavage carburant est le courant électrique consommé par chaque pompe de gavage carburant, le second paramètre est la quantité moyenne de carburant mesurée sur le réservoir nourrice, et le troisième paramètre est la quantité moyenne de carburant mesurée dans le réservoir principal.

14. Méthode de maintenance d'un ensemble comprenant une ou plusieurs séries d'équipements comprenant au moins un premier et un second équipement fonctionnant tous les deux en parallèle et sensiblement de la même manière, ladite méthode mettant en oeuvre la méthode selon l'une quelconque des revendications précédentes.

## Patentansprüche

1. Verfahren zur Vorhersage einer Anomalie beim Betrieb einer oder mehrerer Vorrichtungen in einer Anordnung, wobei das Verfahren die folgenden Schritte umfasst:
- Verwenden einer Anordnung, die mindestens einen Betriebszyklus aufweist, und umfassend eine oder mehrere Reihen von Vorrichtungen, umfassend mindestens eine erste und eine zweite Vorrichtung, die beide parallel und im Wesentlichen auf die gleiche Weise in Betrieb sind, wobei jede Vorrichtung einen ersten Betriebsparameter oder mindestens einen ersten, einen zweiten und einen dritten Betriebsparameter umfasst, wobei sich jeder Parameter im Laufe der Zeit auf eine ähnliche Weise zwischen der ersten und der zweiten Vorrichtung entwickelt,
- Registrieren und Speichern der Messungen im Laufe der Zeit des ersten oder der zweiten Parameter für die erste und die zweite Vorrichtung bei einem oder mehreren Betriebszyklen oder einem oder mehreren Teilen des oder der Zyklen,
- Sammeln der Messungen während oder nach dem Beenden eines oder mehrerer Betriebszyklen, eines oder mehrerer Teile des oder der Zyklen,
- Verarbeiten der gesammelten Messungen, um eine mögliche Betriebsstörung der ersten und/oder der zweiten Vorrichtung nachzuweisen, indem ein erster Bestimmungskoeffizient zwischen den Messungen des ersten Parameters der ersten Vorrichtung und den Messungen des ersten Parameters der zweiten Vorrichtung festgesetzt wird,
- wenn, bei einem oder mehreren Betriebszyklen oder einem oder mehreren Teilen des oder der Zyklen, der erste Bestimmungskoeffizient kleiner als ein erster bestimmter Schwellenwert ist, Ausgeben einer Mitteilung, die die Betriebsstörung des und/oder der ersten und zweiten Vorrichtungen anzeigt, und/oder In-Gang-Setzen der zusätzlichen Schritte des Verfahrens, und, vorzugsweise wenn der erste Bestimmungskoeffizient gleich wie oder grösser als der erste Schwellenwert ist, Ausgeben einer Mitteilung, die die Abwesenheit einer Betriebsstörung des und/oder der ersten und zweiten Vorrichtungen anzeigt, und/oder Einstellen des ersten Schwellenwerts in Funktion des ersten Bestimmungskoeffizienten.

2. Verfahren nach Anspruch 1, umfassend außerdem die vorherige Auswahl der Reihe oder Reihen der ersten und zweiten Vorrichtung der Anordnung und/oder des ersten Betriebsparameters der ersten oder der zweiten Vorrichtung.

3. Verfahren nach einem der Ansprüche 1 oder 2, umfassend außerdem die folgenden Schritte:
- Bestimmen einer linearen Regressionsgleichung vom Typ y = ax + b zwischen dem ersten Betriebsparameter der ersten Vorrichtung und dem ersten Betriebsparameter der zweiten Vorrichtung bei einem oder mehreren Betriebszyklen oder einem oder mehreren Teilen des oder der Zyklen und Bestimmen des absoluten Werts der Kontante "b" der Gleichung,
- wenn der absolute Wert kleiner als oder gleich wie ein vorbestimmter Wert ist, Festsetzen für die erste und/oder die zweite Vorrichtung, bei dem oder den Betriebszyklen oder Teil(en) des oder der Zyklen, eines zweiten Bestimmungskoeffizienten zwischen dem ersten Betriebsparameter und dem zweiten Betriebsparameter und einem dritten Bestimmungskoeffizienten zwischen dem ersten Betriebsparameter und dem dritten Betriebsparameter, und wenn der zweite und dritte Bestimmungskoeffizient grösser als oder gleich wie jeweils ein zweiter und ein dritter Schwellenwert sind, Ausgeben einer Mitteilung, die die Abwesenheit einer Betriebsstörung anzeigt, und/oder Einstellen des zweiten oder dritten Schwellenwerts in Funktion des zweiten und dritten Bestimmungskoeffizienten,
- wenn der absolute Wert grösser als der vorbestimmte Wert ist, Bewerten eines Funktionsgeräuschs der ersten und/oder der zweiten Vorrichtung,
- wenn das Geräusch grösser als ein bestimmter Bereich von Werten ist, Ausgeben einer Mitteilung der Betriebsstörung des und/oder der Vorrichtungen,
- wenn das Geräusch in dem vorbestimmten Bereich enthalten ist, ohne Anwesenheit von Spitzenwerten des ersten Betriebsparameters, Ausgeben einer Mitteilung, die die Abwesenheit einer Betriebsstörung anzeigt, und/oder Einstellen des bestimmten Bereichs von Werten auf das Betriebsgeräusch,
- wenn das Geräusch in einem vorbestimmten Bereich von Werten enthalten ist, bei Anwesenheit von Spitzenwerten des ersten Betriebsparameters, Ausgeben einer Mitteilung, die eine Betriebsstörung des und/oder der Vorrichtungen anzeigt, die eine Betriebsstörung des und/oder der Vorrichtungen anzeigt.

4. Verfahren nach dem vorhergehenden Anspruch, wobei der Schritt des Bestimmens des Betriebsgeräuschs der ersten und/oder der zweiten Vorrichtung durchgeführt wird, indem typische Abweichungen der Messungen des ersten Betriebsparameters mit Bezug auf den Mittelwert der Messungen eines oder mehrerer Betriebszyklen oder eines oder mehrerer Teile des oder der Betriebszyklen bestimmt werden, und durch Vergleichen der typischen Abweichungen mit einem bestimmten Bereich von begrenzten mittleren Werten.

5. Verfahren nach einem der Ansprüche 3 oder 4, wobei der zweite und der dritte Parameter ausgewählt sind aus Betriebsparametern der ersten und zweiten Vorrichtung, die verschieden vom ersten Betriebsparameter sind, wobei die anderen Parameter ein oder mehrere Parameter sind, die direkt den Betrieb der ersten und/oder der zweiten Vorrichtung, einen oder mehrere Betriebsparameter einer oder mehrerer anderere Vorrichtungen der Anordnung oder eine Kombination derselben beeinflussen.

6. Verfahren nach einem der Ansprüche 1 oder 2, wobei der erste Schwellenwert des ersten Bestimmungskoeffizienten bei einem oder mehreren Betriebszyklen der Anordnung oder dem oder den Teil(en) des oder der Zyklen bestimmt wird, in dem oder in denen keine Betriebsstörung der ersten und/oder der zweiten Vorrichtung nachgewiesen wurde.

7. Verfahren nach einem der Ansprüche 3 bis 6, wobei der zweite Schwellenwert des zweiten Bestimmungskoeffizienten und/oder der dritte Schwellenwert des dritten Bestimmungskoeffizienten und/oder der absolute Wert der Konstante der linearen Regressionsgleichung bei einem oder mehreren Betriebszyklen der Anordnung oder einem oder mehreren Teilen des oder der Zyklen bestimmt wird/werden, in dem oder in denen keine Betriebsstörung der ersten und/oder der zweiten Vorrichtung nachgewiesen wurde.

8. Verfahren nach Anspruch 4, wobei der bestimmte Bereich von begrenzten mittleren Werten der typischen Abweichungen der Messungen des ersten Parameters bei einem oder mehreren Betriebszyklen der Anordnung oder einem oder mehreren Teil(en) des oder der Zyklen bestimmt wird, in dem oder in denen keine Betriebsstörung der ersten und/oder der zweiten Vorrichtung nachgewiesen wurde.

9. Verfahren nach einem der Ansprüche 1 oder 3, umfassend außerdem eine oder mehrere graphische Darstellungen in Funktion des oder der Betriebszyklen, oder Teile des oder der Zyklen, der Messungen des ersten Betriebsparameters der ersten und/oder der zweiten Vorrichtung, und/oder des ersten Bestimmungskoeffizienten oder des ersten Betriebsparameters des ersten Bestimmungskoeffizienten und des zweiten und/oder des dritten Parameters und/oder des ersten und/oder zweiten und/oder dritten Bestimmungskoeffizienten und/oder der Spitzenwerte bei den Messungen des ersten Parameters.

10. Verfahren nach Anspruch 1, umfassend außerdem eine oder mehrere graphische Darstellungen in Funktion des oder der Betriebszyklen, oder Teile des oder der Zyklen, der Messungen des ersten Betriebsparameters der ersten und/oder der zweiten Vorrichtung, und/oder des ersten Bestimmungskoeffizienten und/oder der Spitzenwerte bei den Messungen des ersten Parameters.

11. Verfahren nach Anspruch 3, umfassend außerdem eine oder mehrere graphische Darstellungen in Funktion des oder der Betriebszyklen, oder Teile des oder der Zyklen, der Messungen des ersten Betriebsparameters der ersten und/oder der zweiten Vorrichtung, des ersten Bestimmungskoeffizienten und des zweiten und/oder des dritten Parameters und/oder des ersten und/oder des zweiten und/oder des dritten Bestimmungskoeffizienten und/oder der Spitzenwerte bei den Messungen des ersten Parameters.

12. Verfahren nach einem der vorhergehenden Ansprüche, wobei die Anordnung ausgewählt ist aus einem Flugzeug, einem Auto, einem Bus, einem Lastwagen, einer Lokomotive, einem Boot, einem Schiff oder einem autonomen oder nicht autonomen Raumfahrzeug, und die erste und die zweite Vorrichtung rotierende Maschinen sind.

13. Verfahren nach dem vorhergehenden Anspruch, wobei die Anordnung ein Flugzeug ist, die erste und die zweite Vorrichtung Kraftstoffzufuhrpumpen eines oder mehrerer Motoren sind, der erste Betriebsparameter der Kraftstoffzufuhrpumpen der elektrische Strom ist, der von jeder Kraftstoffzufuhrpumpe verbraucht wird, der zweite Parameter die mittlere Menge an Kraftstoff ist, die auf dem Zufuhrtank gemessen wird, und der dritte Parameter die mittlere Menge an Kraftstoff ist, die im Haupttank gemessen wird.

14. Verfahren zur Wertung einer Anordnung, umfassend eine oder mehrere Reihen von Vorrichtungen, umfassend mindestens eine erste und eine zweite Vorrichtung, die beide parallel und im Wesentlichen auf die gleiche Weise in Betrieb sind, wobei das Verfahren das Verfahren nach einem der vorhergehenden Ansprüche durchführt.

## Claims

1. A method of predicting an operation anomaly of one or several equipment of an assembly, said method comprising the following steps:
- taking an assembly, having at least one operating cycle, and comprising one or several series of equipment comprising at least a first and a second equipment both operating in parallel, and in substantially the same manner, each equipment comprising a first operating parameter or at least a first, second and third operating parameter, each parameter evolving over time in a similar manner between said first and said second device,
- recording and storing measurements over time of said first or said second parameters for said first and second equipment, for one or several operating cycles, or one or several parts of said cycle(s),
- collecting said measurements during, or after the completion of, the one or several operating cycles, or one or several parts of said cycle(s),
- processing said collected measurements, for detecting a possible malfunction of said first and/or said second equipment, by establishing a first coefficient of determination between the measurements of the first parameters of said first equipment and the measurements of the first parameters of said second equipment,
- if, for one or several operating cycles, or one or several parts of said cycle(s), said first coefficient of determination is below a first determined threshold, emitting a notification indicating the malfunction of said first and/or second equipment and/or triggering additional steps of the method and, preferably, if said first coefficient of determination is greater than or equal to said first threshold, emitting a notification indicating an absence of malfunction of said first and/or second equipment and/or adjusting said first threshold as a function of said first coefficient of determination.

2. The method according to claim 1, further comprising the prior selection of the one or more series of first and second equipment of the assembly and/or the first operating parameter of said first or said second equipment.

3. The method according to any one of claims 1 or 2, further comprising the following steps:
- determining a linear regression equation, of the type y = ax + b, between the first operating parameter of the first equipment and the first operating parameter of the second equipment for one or several operating cycle(s) or one or several parts of said cycle(s), and determining the absolute value of the constant "b" of said equation,
- if said absolute value is less than or equal to a determined value, establishing, for the first and/or second equipment, for said operating cycle(s), or part(s) of said cycle(s), a second coefficient of determination between said first operating parameter and the second operating parameter, and a third coefficient of determination between said first operating parameter and the third operating parameter, and if said second and third coefficients of determination are greater than or equal to a second and a third threshold, respectively, emitting a notification indicating an absence of malfunction and/or adjusting said second and third thresholds as a function of said second and third coefficients of determination,
- if said absolute value is greater than said determined value, evaluating an operating noise of the first and/or second device,
- if said noise is greater than a determined value range, emitting a malfunction notification of said equipment,
- if said noise is comprised in said determined range, without the presence of value peaks of the first operating parameter, emitting a notification indicating an absence of malfunction and/or adjusting said determined value range for said operating noise,
- if said noise is comprised in a determined value range, in the presence of value peaks of the first operating parameter, emitting a notification indicating a malfunction of said equipment.

4. The method according to the preceding claim, wherein the step of determining operating noise of the first and/or second equipment is done by determining standard deviations of the measurements of the first operating parameter relative to the mean of said measurements over one or several operating cycle(s), or one or several parts of said operating cycle(s), and by comparing said standard deviations to a determined range of limit mean values.

5. The method according to any one of claims 3 or 4, wherein the second and third parameters are chosen from operating parameters of the first and second equipment different from the first operating parameter, said other parameters being one or several parameters directly influencing the operation of said first and/or said second equipment, one or several operating parameters of one or several other devices of the assembly, or a combination thereof.

6. The method according to any one of claims 1 or 2, wherein the first threshold of the first coefficient of determination is determined during one or several operating cycles of the assembly, or the part(s) of said cycle(s) in which no malfunction of the first and/or second device has been detected.

7. The method according to any one of claims 3 to 6, wherein the second threshold of the second coefficient of determination and/or the third threshold of the third coefficient of determination and/or the absolute value of the constant of the linear regression equation is or are determined during one or several operating cycles of the assembly, or one or several parts of said cycle(s), in which no malfunction of the first and/or second device has been detected.

8. The method according to claim 4, wherein the determined range of limit mean values of the standard deviations of the measurements of the first parameter is determined during one or several operating cycles of the assembly, or one or several parts of said cycle(s), in which no malfunction of the first and/or second equipment has been detected.

9. The method according to any one of claims 1 or 3, further comprising one or several graphic representations, as a function of the operating cycle(s), or parts of said cycle(s), of the measurements of the first operating parameter of the first and/or second equipment and/or the first coefficient of determination, or said first operating parameter, said first coefficient of determination and said second and/or third parameter and/or the first and/or second and/or third coefficient of determination and/or value peaks in the measurements of said first parameter.

10. The method according to claim 1, further comprising one or several graphic representations, as a function of the operating cycles, or parts of said cycle(s), of the measurements of the first operating parameter of the first and/or second equipment and/or the first coefficient of determination and/or value peaks in the measurements of said first parameter.

11. The method according to claim 3, further comprising one or several graphic representations, as a function of the operating cycle(s), or parts of said cycle(s), of the measurements of the first operating parameter of the first and/or second equipment, the first coefficient of determination and the second and/or third parameter and/or the first and/or second and/or third coefficient of determination and/or value peaks in the measurements of said first parameter.

12. The method according to any one of the preceding claims, wherein the assembly is chosen from an aircraft, a car, a bus, a truck, a locomotive, a boat, a ship or a spacecraft, autonomous or not, and the first and second device are rotary machines.

13. The method according to the preceding claim, wherein the assembly is an aircraft, the first and second equipment are the fuel booster pumps of one or several engines, the first operating parameter of said fuel booster pumps is the electric current consumed by each fuel booster pump, the second parameter is the mean quantity of fuel measured in a surge tank, and the third parameter is the mean quantity of fuel measured in the main tank.

14. A maintenance method of an assembly comprising one or several series of equipment comprising at least a first and a second device both operating in parallel and substantially in the same manner, said method implementing the method according to any one of the preceding claims.
